## Europäisches Patentamt
## European Patent Office
## Office européen des brevets

(11) Numéro de publication: **0 031 745**
A2

(12) **DEMANDE DE BREVET EUROPEEN**

(21) Numéro de dépôt: **80401759.8**

(22) Date de dépôt: **09.12.80**

(51) Int. Cl.³: **C 08 L 101/00, C 08 L 97/02**

(30) Priorité: **11.12.79  FR 7930378**

(43) Date de publication de la demande: **08.07.81**
**Bulletin 81/27**

(84) Etats contractants désignés: **AT BE CH DE FR GB IT LI LU NL SE**

(71) Demandeur: **SOCIETE INDUSTRIELLE ET COMMERCIALE DE TRANSFORMATION DES PLASTIQUES SICOPAL, Z.I.No1, F-62290 Noeux les Mines (FR)**

(72) Inventeur: **Duchateau, Henri, 26 Résidence Buridan, F-62300 Lens (FR)**

(74) Mandataire: **Combe, André et al, CABINET BEAU DE LOMENIE 55 rue d'Amsterdam, F-75008 Paris (FR)**

(54) **Nouveau matériau composite à base de bois et de matière thermoplastique et procédé de préparation dudit matériau.**

(57) La présente invention concerne un matériau composite nouveau formé de bois dispersé dans un matériau thermosplastique formant matrice, caractérisé en ce que:

— le bois est présent dans ledit matériau à raison de 15 à 50% en poids, par rapport au matériau final sous forme de particules fibreuses de diamètre moyen compris entre environ 0,1 et environ 1 mm et de longueur égale à au plus 10 fois ledit diamètre,

— et le matériau final a une masse voluminique qui est de 10 à 20% inférieure à la masse volumique du matériau thermoplatique formant matrice;

et un procédé de préparation dudit matériau.

0031745

Nouveau matériau composite à base de bois et de matière thermoplastique et procédé de préparation dudit matériau.

La présente invention concerne un nouveau matériau composite à base de bois et de matière thermoplastique et un procédé de préparation dudit matériau.

On a cherché fréquemment à utiliser les propriétés du bois pour la fabrication de matériaux composites présentant une rigidité suffisante, une densité relativement faible et des prix bas. Les procédés connus consistent à utiliser des fibres de bois que l'on agglomère à l'aide d'une colle plastique thermodurcissable avec chauffage et pressage convenables.

On a également préconisé, par ailleurs, d'utiliser de la farine de bois comme charge dans les matières plastiques.

Cependant, on n'a jamais décrit l'utilisation de particules de bois en forme de fibres, particules présentant pourtant des propriétés particulièrement intéressantes comme charge renforçante dans les matières thermoplastiques. Il se trouve en effet que, lorsque l'on essaie de réaliser des complexes bois-matériau thermoplastique au moyen des techniques connues de transformation des matières thermoplastiques techniques telles que l'injection et l'extrusion, on se heurte aux difficultés suivantes :

- enchevêtrement des fibres,
- détérioration des propriétés des fibres par oxydation à chaud,
- mouillabilité insuffisante des fibres.

La présente invention vise à surmonter ces diverses difficultés en vue de l'obtention d'un matériau composite relativement allégé composé essentiellement de particules de bois en forme de fibres et de matière thermoplastique.

Il a été trouvé tout d'abord que les particules de bois en forme de fibres devaient avoir certaines dimensions, à savoir un diamètre moyen (lesdites particules étant en première approximation assimilées à de petits cylindres) compris entre environ 0,1 et environ 1 mm et une longueur au plus égale à 10 fois le diamètre. Ces particules peuvent être considérées comme de courtes fibres du bois.

Il a été trouvé ensuite que les conditions opératoires à utiliser pour réaliser le mélange des fibres et de la matière thermoplastique et la mise en forme du composé obtenu doivent être telles que la destruction par oxydation des particules de bois fibreuses ne soit pas réalisée. Cela nécessite un contrôle de l'oxygène dans l'appareil où est réalisé le mélange (par exemple l'appareil d'injection). Bien évidemment, le contrôle de cet oxygène doit être d'autant plus important que la température à laquelle sont réalisés le mélange et l'injection (formation de la pièce) est plus élevée. Lorsque les matériaux thermoplastiques utilisés peuvent être injectés à 220°C, par exemple, une élimination sommaire de l'oxygène suffit; par contre, lorsque les matériaux thermoplastiques utilisés doivent être injectés à des températures de 280 à 290°C, l'élimination de l'oxygène doit être aussi complète que possible.

Il a été trouvé ensuite que la teneur en eau du bois doit être soigneusement contrôlée. En effet, lors du mélange du bois et du matériau thermoplastique, l'eau présente dans le bois se dégage sous forme de vapeur. Ce dégagement est techniquement important, car il conduit à un matériau allégé par rapport au matériau thermoplastique seul, mais il ne doit pas être trop important de façon à donner naissance à des produits finis présentant des propriétés mécaniques convenables. La teneur en eau du bois doit être comprise entre environ 3 et environ 10% en poids.

Enfin, on a déterminé que, dans la pratique, les meilleurs matériaux composites étaient obtenus en utilisant de 15 à 50% en poids de bois par rapport au matériau final (bois plus thermoplastique).

La présente invention concerne donc un matériau composite formé de bois dispersé dans un matériau thermoplastique formant matrice, caractérisé en ce que :
- le bois est présent dans ledit matériau à raison de 15 à 50% en poids, par rapport au matériau final, sous forme de particules fibreuses de diamètre moyen compris entre environ 0,1 et environ 1 mm et de longueur égale à au plus 10 fois ledit diamètre,
- et le matériau final a une masse volumique qui est de 10 à 20% inférieure à la masse volumique du matériau thermoplastique formant matrice.

Le matériau thermoplastique formant matrice peut être un polymère thermoplastique quelconque et, notamment, le polyéthylène haute ou basse densité, le polypropylène, le polystyrène et les copolymères thermoplastiques. Ce matériau thermoplastique peut bien évidemment comporter des charges et additifs connus et utilisés habituellement dans ces matériaux; il peut également comporter une faible proportion d'un élastomère destiné à améliorer la résistance au choc du produit fini.

Les particules de bois peuvent éventuellement avoir été enrobées, avant mélange avec le matériau thermoplastique, à l'aide d'un matériau d'enrobage tel qu'une cire (cire de polyéthylène, par exemple) ou un silicate ou un carbonate de calcium. Cette technique du préenrobage est utilisée notamment pour permettre un meilleur contrôle de l'humidité du bois lors de son utilisation et pour empêcher les reprises d'humidité sur l'objet final.

Le procédé selon l'invention est essentiellement caractérisé en ce que l'on réalise le mélange des quantités convenables de particules de bois en forme de fibres ayant un taux d'humidité contrôlé et du matériau thermoplastique en effectuant la fusion dudit matériau plastique, ledit mélange étant effectué en atmosphère contrôlée en oxygène, puis l'on met en forme, par injection, extrusion ou compression le mélange ainsi réalisé.

Bien évidemment, les additifs, charges ou élastomères que le matériau thermoplastique peut contenir peuvent être ajoutés au moment de la réalisation du mélange dudit matériau thermoplastique avec les particules de bois ou peuvent être mélangés au préalable avec ledit matériau thermoplastique. La matériau thermoplastique est utilisé, comme connu, sous forme de grains, granulés, etc. Il est souvent souhaitable d'utiliser le matériau thermoplastique sous forme de billes dont le diamètre est du même ordre de grandeur que le diamètre moyen des particules de bois.

Lorsque les particules de bois sont enrobées comme décrit ci-dessus, ledit enrobage est avantageusement effectué avant le mélange desdites particules avec le matériau thermoplastique.

Le contrôle de l'oxygène s'effectue généralement de façon très simple en balayant à l'aide d'un courant de gaz inerte la trémie par laquelle on admet, dans l'appareil où s'effectue le mélange du bois et du matériau thermoplastique, les ingrédients du mélange.

L'exemple non limitatif suivant illustrent l'invention. On a utilisé comme bois des fibres de hêtre obtenues mécaniquement par défibrillation. Les fibres obtenues sont triées de façon à éliminer les fines particules (présentant un "diamètre" inférieur à 0,1 mm). Les fibres restantes ont toutes un diamètre compris entre environ 0,1 et 1 mm et une longueur inférieure à 10 mm. Ces fibres sont séchées jusqu'à obtention d'une teneur en eau de l'ordre de 7%.

Les fibres sont mélangées dans un mélangeur interne avec de la poudre de cire de polyéthylène, de façon à enrober lesdites fibres. On ajoute ensuite dans le même mélangeur des billes de polyéthylène de grade 15 et on mélange l'ensemble.

Le mélange ainsi obtenu est versé dans la trémie d'un appareil d'injection avec vis; puis l'atmosphère de la trémie est balayée par un courant d'azote. L'appareil d'injection est mis en marche (en réalité, il s'agit d'un essai continu) et le matériau, après fusion et homogénéisation par la vis, est injecté dans un moule convenable.

On a réalisé ainsi des plaques, des pièces en forme pour automobile, etc.

0031745

REVENDICATIONS
--------------------------------

1.          Matériau composite nouveau formé de bois dispersé dans un matériau thermoplastique formant matrice, caractérisé en ce que :
- le bois est présent dans ledit matériau à raison de 15 à 50 % en poids, par rapport au matériau final sous forme de particules fibreuses de diamètre moyen compris entre environ 0,1 et environ 1 mm et de longueur égale à au plus 10 fois ledit diamètre, et
- le matériau final a une masse volumique qui est de 10 à 20 % inférieure à la masse volumique du matériau thermoplastique formant matrice.

2.          Matériau selon la revendication 1, caractérisé en ce que le matériau thermoplastique formant matrice comporte des additifs tels que des charges, des élastomères.

3.          Matériau selon l'une des revendications 1 et 2, caractérisé en ce qu'il comporte au moins un matériau d'enrobage comme une cire, un silicate ou un carbonate de calcium ayant servi à l'enrobage des particules de bois utilisées.

4.          Procédé pour la réalisation d'un matériau composite selon l'une des revendications 1 et 2, caractérisé en ce que l'on mélange lesdites particules de bois ayant un taux d'humidité compris entre 3 et 10 % en poids avec le matériau thermoplastique fondu, ledit mélange étant effectué en atmosphère contrôlée en oxygène.

5.          Procédé selon la revendication 4, caractérisé en ce que lesdites particules de bois ont été au préalable enrobées à l'aide d'un matériau d'enrobage tel qu'une cire, un silicate ou un carbonate de calcium.

6.          Procédé selon l'une des revendications 4 et 5, caractérisé en ce que ledit mélange est réalisé à l'aide d'une vis d'une machine d'injection ou d'extrusion alimentée à partir d'une trémie dont l'atmosphère est balayée par un courant de gaz inerte et que l'on injecte ledit mélange dans un moule convenable.